# EUROPÄISCHE PATENTSCHRIFT

(11) **EP 0 589 032 B1**
(45) Veröffentlichungstag und Bekanntmachung des Hinweises auf die Patenterteilung: **10.09.1997**
(21) Anmeldenummer: 93911447.6
(22) Anmeldetag: 06.04.1993
(51) Int. Cl.: B01D 29/09, B41F 7/24, B41F 7/32

(54) **VERFAHREN UND VORRICHTUNG ZUM RECYCLING VON VERSCHMUTZTEM PROZESSWASSER**
PROCESS AND DEVICE FOR RECYCLING POLLUTED PROCESS WATER
PROCEDE ET DISPOSITIF DE RECYCLAGE D'EAU DE TRAITEMENT POLLUEE

(30) Priorität: 07.04.1992 DE 4211656
(43) Veröffentlichungstag der Anmeldung: 30.03.1994
(73) Patentinhaber: TECHNOTRANS GMBH, 48336 Sassenberg (DE)
(72) Erfinder: MARTENS, Heinz, D-4700 Hamm (DE); FRITZ, Andreas, D-4791 Altenbecken (DE)
(74) Vertreter: Schmidt, Horst, Dr.
(86) Internationale Anmeldenummer: EP9300854
(87) Internationale Veröffentlichungsnummer: WO9319829

(56) Entgegenhaltungen:
- EP-A- 0 147 568
- EP-A- 0 170 160
- EP-A- 0 325 021
- DE-A- 4 022 315
- DE-U- 9 101 888

## Beschreibung

Die Erfindung betrifft ein Verfahren und eine Vorrichtung zum Filtern von verschmutztem Prozesswasser.

Die Erfindung betrifft insbesondere das Recycling von Feuchtmittel aus Offsetdruckbetrieben. Feuchtmittel können aus Wasser, Isopropylalkohol und Zusätzen bestehen und Verschmutzungen enthalten, die während des Druckprozesses in das Feuchtmittel gelangt sind. Dabei kann es sich um Bestandteile von Druckfarbe oder des bedruckten Papiers handeln, oder die Verschmutzungen stammen aus der Umgebun. Sie können in jedem Fall den Druckprozess beeinträchtigen und müssen daher aus dem Feuchtmittel entfernt werden, wenn nicht eine vorzeitige Vernichtung des Feuchtmittels in Kauf genommen werden soll. Aus der EP-A-147568 ist eine Feuchtmittel-Recyclingvorrichtung bekannt, bei der das verschmutzte Feuchtmittel in einen Vorratstank eingegeben wird, von wo es in Gestalt eines Überlauf drucklos auf einen Filterkörper herabströmmt, um nach Durchtritt durch den Filterkörper in einem weiteren Tank zur weiteren Verwendung gesammelt zu werden. Die bekannte Vorrichtung sieht daher ein einmaliges Filtrieren des verschmutzten Feuchtmittels vor dessen Rückführung in den Druckprozess vor.

Die bekannten Methoden der Feuchtmittelreinigung basieren ferner auf der Filtrierung mittels Filtermatten, Filterbeuteln oder Filterkerzen. Diese Art der Filtrierung eignet sich nur zur Abtrennung grober Verschmutzungen, da die feinen und dispersen Anteil von Verschmutzungen mit den bekannten Methoden nicht oder nicht im erforderlichen Ausmass beseitigt werden können. Durch die kontinuierlich Zunahme von unerwünschten Feinanteilen im Feuchtmittel war es daher erforderlich, dieses von Zeit zu Zeit auszuwechseln und durch frisches Feuchtmittel zu ersetzen, selbst wenn man das Feuchtmittel einer Filtrierung in der erwähnten Weise sporadisch unterworfen hatte. Dies hat nicht nur die Vernichtung der grundsätzlich wiederverwendbaren wertvollen Bestandteile von verschmutztem Feuchtmittel zur Folge, sondern bedeutet auch eine ernste Belastung der Umwelt wegen der erforderlichen Entsorgung als Sonderabfall oder der nicht auszuschliesssenden Einleitung des verschmutzten Feuchtmittels in die örtliche Kanalisation.

Der Erfindung liegt die Aufgabe zugrunde, ein Verfahren und eine Vorrichtung der eingangs erwähnten Gattung zu schaffen, die in wirtschaftlicher Weise eine auch die weitgehende Beseitigung von Feinanteilen umfassende Reinigung des Prozesswassers bzw. Feuchtmittels erlauben.

Die Aufgabe wird erfindungsgemäss durch die Merkmale der Patentansprüche 1 und 5 gelöst. Die Erfindung basiert somit auf einer Abfolge von Verfahrensschritten, die ein Absaugen des verschmutzten Feuchtmittels aus dem jeweiligen Prozess, z.B. aus dem Feuchtmittelkonditionierungsgerätes einer Druckmaschine, die Einleitung des abgesaugten Feuchmittels in einen Vorratsbehälter, und die ein- oder mehrmalige Behandlung des abgesaugten Feuchmittels in einer besonders ausgestalteten Filtereinheit zur Filtration im Querstromprinzip umfassen, um die feinen und dispersen Bestandteile im verschmutzten Feuchtmittel zuverlässig abzuscheiden. Das erfindungsgemässe Filterverfahren schafft wiederwendbare Filtrate von Prozesswasser unter Beibehaltung von dessen chemischen Eigenschaften.

Die Erfindung wird nachfolgend anhand einer Ausführungsform und der Zeichnung näher erläutert. Es zeigen:
Fig. 1 in teilweise schematischer Gesamtansicht eine erfindungsgemäss aufgebaute Vorrichtung zur Entnahme, Reinigung und Rückführung von verschmutztem Prozesswasser,
Fig. 2 die Vorrichtung nach Fig. 1 in Seitenansicht,
Fig. 3 in vergrösserter längsgeschnittener Ansicht eine Filtereinheit der Vorrichtung nach Fig. 1 in Betriebsstellung,
Fig. 4 in einer Ansicht ähnlich Fig. 3 die Filtereinheit in einer Stellung, die einen Weitertransport des Filtermittels erlaubt, und
Fig. 5 einen Teil der Filtereinheit nach Fig 3 in einer seitlichen Ansicht in der Ebene der seitlichen Dichtflächen.

Obschon nachfolgend unter dem Begriff "Recycling" die Aufarbeitung von Feuchtmitteln des Offsetdrucks zu verstehen ist, ist die Erfindung auf dieses Anwendungsgebiet nicht beschränkt. Vielmehr kann sie überall dort vorteilhaft eingesetzt werden, wo es gilt, eine wässrige kontinuierliche Phase eines Prozesswassers von einer partikelartigen dispersen Phase von Zeit zu Zeit zu trennen.

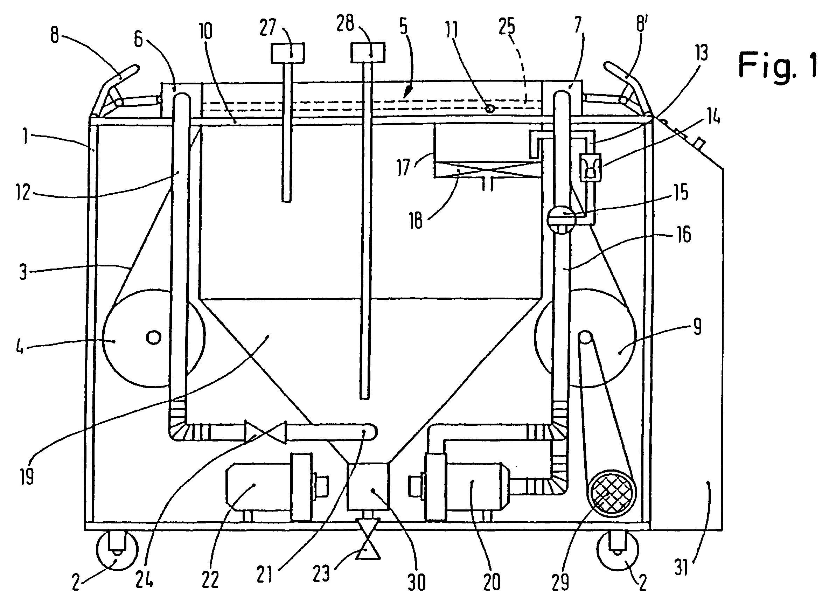

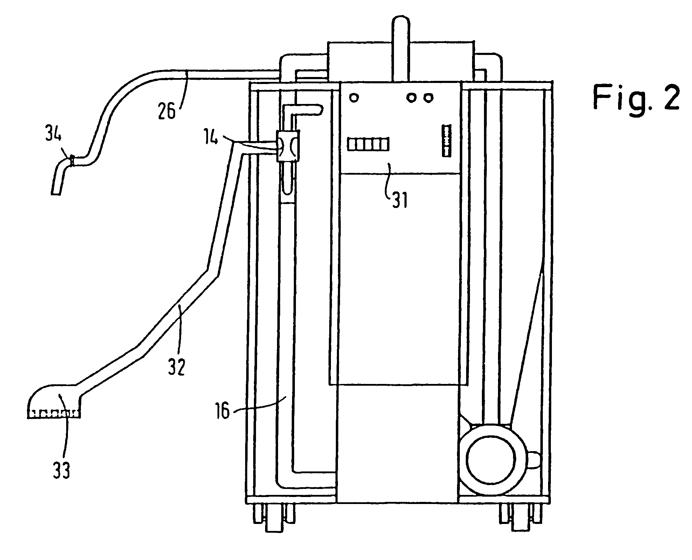

Mit Bezug auf Fig. 1 und 2 ist an einem mittels Laufrädern 2 bewegbaren Rahmen 1 eine Vorratsrolle 4 gehalten, auf der ein bahnförmiges Filtermittel 3 aufgewickelt ist. Das Filtermittel 3 wird durch eine allgemein mit 5 bezeichnete, an der Oberseite des Rahmens 1 angeordnete Filtereinheit 5 geführt und kann als verbrauchtes Filtermittel von einer weiteren am Rahmen 1 gehaltenen Rolle 9 aufgenommen werden.

Beim Filtermittel 3 handelt es sich vorzugsweise um ein bahnförmiges, hochporöses, elastisches, flächiges Membranfiltermaterial aus einem geeigneten Kunststoff, wie Polypropylen oder Polyamid. Derartige Filtermaterialien sind grundsätzlich bekannt und können z.B. von der Firma Enka AG/Wuppertal unter dem Handelsnamen "Accurel" bezogen werden.

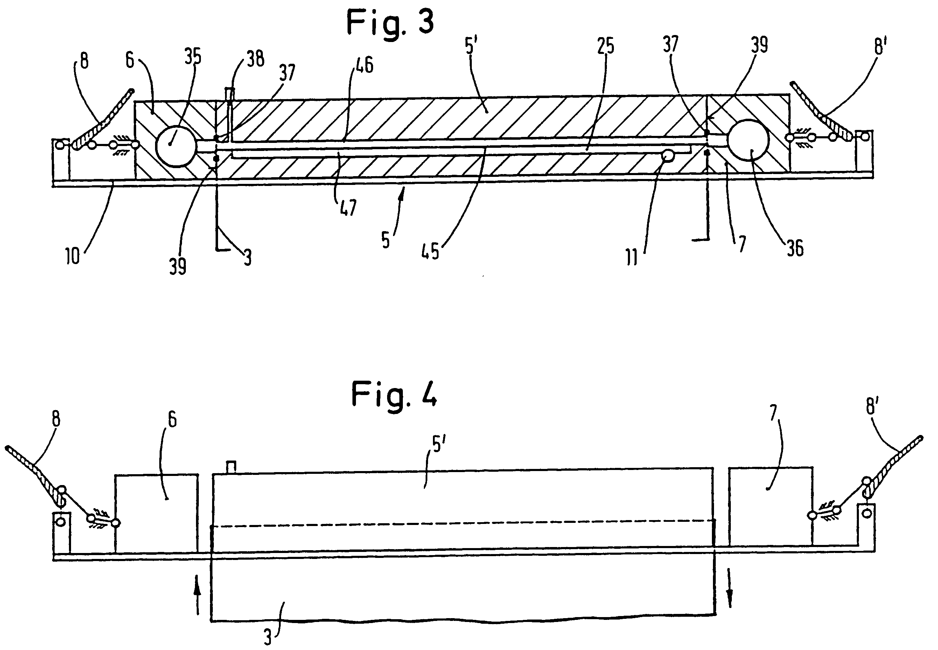

Die Filtereinheit 5 ist in Fig. 3 und 4 im Detail gezeigt und umfasst einen Basiskörper oder ein Substrat 10 und ein Paar darauf in Abstand voneinander angeordnete auf- und abstromseitige Schliessköpfe 6, 7 mit Betätigungseinrichtungen 8, 8', zwischen welchen Schliessköpfen 6, 7 ein zentrales Filterteil 5' mit einem darin gebildeten länglichen Filterkanal 25 vorgesehen ist. Jeder Schliesskopf 6, 7 enthält eine Strömungspassage 35 bzw. 36 mit einer Verbindungspassage, die zum Filterkanal 25 ausgerichtet ist. Die Betätigungseinrichtungen 8, 8' können z.B. in Form von Kniehebeleinrichtungen ausgebildet sein und dienen dazu, den abstromseitigen Schliesskopf 6 bzw. den aufstromseitigen Schliesskopf 7 zu bewegen, um die Strömungspassagen 35, 36 der Schliessköpfe 6, 7 in und aus einer Fluidverbindung mit dem Filterkanal 25 zu bringen.

Die Strömungspasssage 35 des abstromseitigen Schliesskopfes 6 steht mit einer in Fig. 1 gezeigten Leitung 12 und die Strömungspassage 36 des aufstromseitigen Schliesskopfes 7 mit einer Leitung 16 in Verbindung. In der Rohrleitung 16 kann ein Dreiwegeventil 15 integriert sein, an dessen einen Ausgang eine Bypassleistung 13, welche eine Ejektoreinrichtung 14 enthalten kann, angeschlossen ist, die zu einem Vorfilter 17 mit einem Filter in Gestalt z.B. einer Filtermatte 18 führt. Auf diese Weise wird ermöglicht, das zu filtrierende Feuchtmittel zum Abscheiden grober Verschmutzungspartikel einer Vorfiltrierung zu unterwerfen, bevor es in einen Feuchtmittel-Vorratsbehälter 19 gelangt, der unter der Filtereinheit 5 zur Bevorratung einer zu filtrierenden Feuchtmittelmenge angeordnet ist.

Eine Pumpe 20 dient zur Förderung des Feuchtmittels aus dem Behälter 19 über die Rohrleitung 16 zum Dreiwegeventil 15. In einer Stellung des Dreiwegeventiles 15 wird das verschmutzte Feuchtmittel über den aufstromseitigen Schliesskopf 7 in den Filterkanal 25 der Filtereinheit 5 geleitet und aus dem Filterkanal 25 über den abstromseitigen Schliesskopf 8 herausgeführt, um über die Rohrleitung 12 und ein darin ggf. integriertes Einstellventil 24 einer Einführöffnung 21 des Behälters 19 zugeführt zu werden, von wo es, wenn erwünscht, erneut ein- oder mehrmalig der Filtereinheit 5 zugeführt werden kann. Die Einführung des Feuchtmittels in den Behälter 19 erfolgt an einer Stelle, die eine Traubenbildung im Filterkanal 25 der Filtereinheit 5 vermeidet.

An der Filtereinheit 5 kann das Filtrat an einem Filtratauslass 11 abgenommen und über einen flexiblen Schlauch 26, vgl. Fig. 2, zurück zum Entnahmeort, z.B. einem Feuchtmittel-Konditionierungsgerät, geleitet werden. Am Schlauch 26 kann ein End- oder Kupplungsstück 34 zum leichteren Abgeben des filtrierten Feuchtmittels vorgesehen sein.

Eine Sensoreinrichtung 27 ist vorgesehen, um die Höhe des Flüssigkeitsspiegels im Behälter 19 zu überwachen und die Pumpe 20 abzuschalten, wenn ein eingestelltes Maximum erreicht ist. Eine weitere Sensoreinrichtung 28 ist Vorgesehen, um ein Absinken des Füllstandsspiegels im Behälter 19 unter ein einstellbares Minimum zu verhindern und die Pumpe 20 bei Erreichen des Füllstandsminimums in Betrieb zu setzen. Eine in Fig. 1 gezeigte zusätzliche Pumpe 22 kann vorgesehen sein, um den Feuchtmittelstrom durch die Filtereinheit 5, wenn erwünscht, zu verstärken.

Der Behälter 19 ist so ausgelegt, dass sich darin leicht sedimentierende Partikel an einem Sumpf 30 ablagern, von wo sie von Zeit zu Zeit über ein Ablaufventil 23 abgelassen werden können.

Ein mit der Aufwickelrolle 9 verbundener Stellmotor 29 ermöglicht nach Öffnung der Schliessköpfe 6 und 7 der Filtereinheit 5 den Weitertransport des Filtermittels 3 durch den Filterkanal 25, so dass nach Bedarf ein frischer Bereich des Filtermittels 3 in die Filtereinheit 5 eingeführt werden kann.

Ein am Rahmen 1 angeordnetes Steuerpult 31 enthält die für die Regelung, Steuerung und Kontrolle erforderlichen elektrischen Einrichtungen.

Mit der Ejektoreinrichtung 14 der Bypassleistung 13 ist ein Schlauch 32 mit einem Saugkopf 33 verbunden, um das verschmutzte Feuchtmittel an der Stelle, an der es anfällt, abzusaugen und dem Vorratsbehälter 19 zuzuführen.

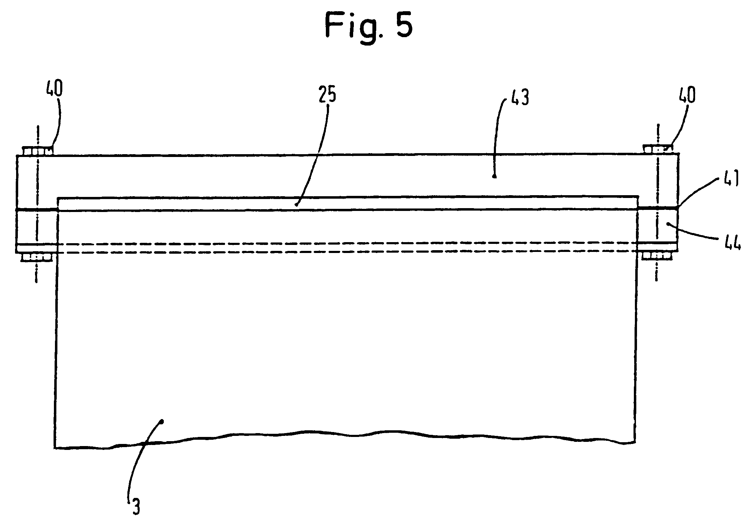

Nach Fig. 3 bis 5 umfasst der zwischen den Schliessköpfen 7, 8 angeordnete zentrale Filterteil 5' der Filtereinheit 5 ein oberes und ein unteres Segment 43, 44, zwischen denen der längliche Filterkanal 25 ausgebildet ist. Der Filterkanal 25 kann z.B. einen rechteckförmigem Querschnitt haben, wie dies am besten in Fig. 5 zu sehen ist. Der Filterkanal 25 wird durch das Filtermittel 3 in eine obere und eine untere Kammer 46, 47 unterteilt. Das Filtermittel 3 stützt sich dabei auf einer in der Filtereinheit 5 gehaltenen, für das Feuchtmittel durchlässigen Auflage oder Halterung 45 ab, so dass das Filtermittel 3 in einer ebenen, vorzugsweise horizontalen Lage gehalten ist. Das verschmutzte Feuchtmittel wird über den aufstromseitigen Schliesskopf 7 in die obere Kammer 46 eingeführt, wobei ein Teil des Feuchtmittels über das Filtermittel 3 in die untere Kammer 47 gelangt und beim Durchgang durch das Filtermittel 3 einer Filtrierung unterworfen wird (Querstromfiltrierung). Das Filtermittel 3 "dichtet" das gereinigte Filtrat in der unteren Kammer 47 gegenüber dem verschmutzten Feuchmittel in der oberen Kammer 46 ab.

Die Schliessköpfe 6 und 7 sind in Fig. 3 in einer Stellung gezeigt, die sie bei Filterbetrieb einnehmen. In dieser Stellung ist der Filterkanal 25 gegen die Aussenumgebung mittels bei 37 angedeuteter Dichtungen, welche mit zugehörigen seitlichen Dichtflächen 39 des Filterteiles 5' zusammenwirken, abgedichtet. Eine das obere Segment 43 des Filterteiles 5' durchsetzende Bohrung 38 erstreckt sich in den Filterkanal 25 und ermöglicht eine Messung und Überwachung der darin herrschenden Feuchtmitteldrücke.

Der überwiegende Teil der sich auf dem Filtermittel 3 ablagernden Verschmutzungen wird durch den Strom des längs der oberen Kammer 46 fliessenden verschmutzten Feuchtmittels mitgerissen, so dass eine selbstreinigende Wirkung in Bezug auf das Filtermittel 3 vorliegt.

Das gereinigte Feuchtmittel wird aus der unteren Kammer 47 an der Auslassöffnung 11 abgenommen und über den flexiblen Schlauch 26 und das Endstück 34 zurück zum Entnahmeort geführt.

Fig. 4 ist eine Ansicht ähnlich Fig. 3 mit Darstellung der Schliessköpfe 6, 7 in geöffneter Stellung. In dieser Stellung kann das Filtermittel 3 durch den Filterkanal 25 weitertransportiert werden, um einen frischen Bereich des Filtermittels 3 im Filterkanal 25 zu positionieren.

Fig. 5 zeigt eine Ansicht des Filterteiles 5' der Filtereinheit 5 seitens einer der seitlichen Dichtflächen 39, vgl. Fig. 3, über die das Filtermittel in den Filterkanal 25 eingeführt wird. Eine Verschraubung 44 dient zur Verbindung des oberen Segmentes 43 mit dem unteren Segment 44 unter Zwischenanordnung einer geeigneten Dichtung 41.

Anstelle des vorbeschriebenen einschichtigen bahnförmigen Filtermittels 3 kann auch ein mehrschichtiges bahnförmiges Filtermittel vorgesehen werden. In diesem Fall kann eine der Schichten die Funktion eines Tiefenfilters mit einer bestimmten elektrischem Polarität haben, während die andere Schicht als Membran mit definierter Porengrösse ausgebildet ist. Die Tiefenfilterschicht ist dabei der oberen Kammer 46 des Filterkanales 25 zugewandt, während die andere Schicht der unteren Kammer 47 zugewandt ist. Eine derartige mehrschichtige Filteranordnung eignet sich insbesondere zur Filtrierung von Suspensionen mit einer breiten Verteilung von Verschmutzungspartikeln, indem eine Fraktionierung der Verschmutzungspartikel beim Durchgang der verschmutzten Suspension durch die mehrschichtige Filtermittelanordnung erzielt wird. Beim Durchströmen der mehrschichtigen Filtermittelanordnung wird ein Teil der Partikel an den Fasern, z.B. polymerumhüllte Glasfasern mit positiver Polarität, der oberen Schicht aufgrund der unterschiedlichen negativen Polarität der Schmutzpartikel abgeschieden. Partikel, die aufgrund ihrer sehr kleinen Abmessungen die obere Schicht dennoch passieren können, lagern sich auf der darunter befindlichen zweiten Schicht ab. Die mehrschichtige Filtermittelanordnung ermöglicht auch eine Filtration gelartiger, hoch konzentrierter Suspensionen. Geeignete mehrschichtige Filtermittel mit Tiefenfilterwirkung können z.B. unter der Typenbezeichnung HDC oder Ultipor von der Firma Pall Filtrationstechnik GmbH/D-6072 Dreieich bezogen werden.

Die Erfindung wurde vorausgehend anhand einer bevorzugten Ausführungsform beschrieben. Es versteht sich jedoch, dass anhand der gegebenen Lehre sich dem Fachmann anbietende Modifikationen vom Schutz der Erfindung umfasst sind.

## Patentansprüche

1. Verfahren zum Filtern von verschmutztem Prozesswasser, insbesondere von Feuchtmittel aus dem Offsetdruck, bei dem eine Menge des verschmutzten Prozesswassers aus dem Prozess entnommen und bevorratet, einem Filtermittel zum Ausfiltern der Verschmutzungen zugeführt und das Filtrat in den Prozess zurückgeführt wird, dadurch gekennzeichnet, dass das Prozesswasser aus dem Vorrat ein- oder mehrmalig von einem zum anderen Ende einer longitudialen obenliegenden Kammer einer Filtereinheit längs eines flächigen Filtermittels, durch das die obenliegende Kammer gegenüber einer untenliegenden longitudinalen Kammer der Filtereinheit abgeteilt ist, strömen gelassen wird, und dass der durch das Filtermittel in die untenliegende Kammer gelangende Teil des Prozesswassers in den Prozess zurückgeführt wird.

2. Verfahren nach Anspruch 1, dadurch gekennzeichnet, dass das Filtermittel eine hochporöse elastische Membran aus einem Kunststoffmaterial umfasst.

3. Verfahren nach Anspruch 1 oder 2, dadurch gekennzeichnet, dass das Filtermittel mehrschichtig ausgebildet ist, wobei eine der Schichten, die der obenliegenden Kammer zugewandt ist, die Funktion eines Tiefenfilters hat.

4. Verfahren nach einem der vorhergehenden Ansprüche, dadurch gekennzeichnet, dass das Prozesswasser durch Absaugen aus dem Prozess entnommen wird.

5. Vorrichtung zum Filtern von verschmutztem Prozesswasser, insbesondere von Feuchtwasser aus dem Offsetdruck, mit einem Vorratsbehälter (19) zur Bevorratung einer Menge an aus dem Druckbetrieb entnommenem verschmutzten Prozesswasser, einer mit dem Vorratsbehälter verbundenen Filtereinheit (5) mit einem Filtermittel (3) zum Filtern des verschmutzten Prozesswassers und einer Einrichtung (11,26,34) zur Rückführung des gefilterten Prozesswassers in den Druckbetrieb, dadurch gekennzeichnet, dass die Filtereinheit (5) durch ein flächiges Filtermittel (3) in eine obenliegende und eine untenliegende, jeweils longitudinale Kammer (46,47) unterteilt ist, wobei endseitig der obenliegenden Kammer (46) Einrichtungen (6,7) zum Zu- und Abführen des verschmutzten Prozesswassers in bzw. aus der obenliegenden Kammer vorgesehen sind, dass ein Zirkulationssystem zum wiederholten Zu- und Abführen des im Vorratsbehälter (19) bevorrateten Prozesswassers in bzw. aus der obenliegenden Kammer (46) der Filtereinheit (5) vorgesehen ist, und dass die Einrichtung (11,26,34) zur Rückführung des gefilterten Prozesswassers mit der untenliegenden longitudinalen Kammer (47) verbunden ist.

6. Vorrichtung nach Anspruch 5, gekennzeichnet durch eine Einrichtung (45) zur ebenen, im wesentlichen horizontalen Abstützung des Filtermittels (3) in der Filtereinheit (5).

7. Vorrichtung nach Anspruch 5 oder 6, dadurch gekennzeichnet, dass eine Bahn des Filtermittels (3) von einer Vorratsrolle (4) durch die Filtereinheit (5) zu einer Aufwickelrolle (9) geführt ist.

8. Vorrichtung nach einem der Ansprüche 5 bis 7, dadurch gekennzeichnet, dass diese als mobile Einheit ausgebildet ist.

## Claims

1. A method of filtering contaminated process water, especially fountain fluid from an off-set printing process, in which a quantity of the contaminated process water is extracted from the process and stored, supplied to a filtering means for filtering out the impurities and the resultant filtrate is returned to the process, characterised in that, the process water from the reservoir is caused, in a single or repeated manner, to flow from one end to the other of an upper longitudinal chamber of a filter unit, along a flat filtering means which partitions the upper chamber from a lower longitudinal chamber of the filter unit, and that the portion of the process water reaching the lower chamber via the filtering means is returned to the process.

2. The method in accordance with claim 1, characterised in that, the filtering means comprises a highly porous resilient membrane consisting of synthetic material.

3. The method in accordance with claim 1 or 2, characterised in that, the filtering means has a multi-layer structure and that the one of the layers facing the upper chamber functions as a depth filter.

4. The method in accordance with any one of the preceding claims, characterised in that, the process water is extracted from the process by suction.

5. An apparatus for filtering contaminated process water, especially fountain fluid from an off-set printing process, comprising a storage container (19) for storing a quantity of contaminated process water extracted from the printing process, a filter unit (5) connected to the storage container and including a filtering means (3) for filtering the contaminated process water, and a means (11, 26, 34) for returning the filtered process water to the printing process, characterised in that, the filter unit (5) is divided by a flat filtering means (3) into an upper and a lower chamber (46, 47), each chamber extending longitudinally, means (6, 7) are provided at the ends of the upper chamber (46) for feeding the contaminated process water into and out of the upper chamber, that a circulating system is provided for repeatedly feeding the contaminated process water stored in the storage container (19) into and out of the upper chamber (46) of the filter unit (5), and that said means (11, 26, 34) for returning the filtered process water is connected to the lower longitudinal chamber (47).

6. The apparatus in accordance with claim 5, characterised by a means (45) for supporting the filtering means (3) in the filter unit (5) in a substantially horizontal plane.

7. The apparatus in accordance with claim 5 or 6, characterised in that, a web of the filtering means (3) is fed through the filter unit (5) from a supply reel (4) to a take-up reel (9).

8. The apparatus in accordance with any one of the claims 5 to 7, characterised in that, it is constructed as a mobile unit.

## Revendications

1. Procédé de filtrage d'eau de processus polluée en particulier de produit de mouillage provenant de l'impression offset, dans lequel une certaine quantité de l'eau de processus usagée est retirée du processus et est stockée, est amenée à un moyen de filtre pour le filtrage des impuretés et le filtrat est renvoyé dans le processus, caractérisé en ce qu'on fait s'écouler l'eau de processus provenant du stockage une ou plusieurs fois d'une extrémité à l'autre d'une chambre supérieure longitudinale d'une unité de filtration le long d'un moyen de filtre plan par lequel la chambre supérieure est séparée d'une chambre longitudinale inférieure de l'unité de filtration et en ce que la partie de l'eau de processus parvenant à travers le moyen de filtre dans la chambre inférieure est renvoyée au processus.

2. Procédé selon la revendication 1, caractérisé en ce que le moyen de filtre comprend une membrane élastique à porosité élevée en matière plastique.

3. Procédé selon la revendication 1 ou 2, caractérisé en ce que le moyen de filtre possède plusieurs couches, une des couches, qui située du côté de la chambre supérieure, ayant la fonction d'un filtre à lit profond.

4. Procédé selon l'une quelconque des revendications précédentes, caractérisé en ce que l'eau de processus est prélevée du processus par aspiration.

5. Dispositif de filtration d'eau de processus polluée, en particulier de produit de mouillage de l'impression offset, comprenant un réservoir de stockage (19) pour stocker une certaine quantité d'eau de processus polluée prélevée de l'installation d'impression, une unité de filtration (5) reliée au réservoir de stockage et comprenant un moyen de filtre (3) pour filtrer l'eau de processus polluée et un dispositif (11, 26, 34) pour ramener l'eau de processus filtrée dans l'installation d'impression, caractérisé en ce que l'unité de filtration (5) est divisée par un moyen de filtre plan (3) en deux chambres longitudinales respectives supérieure et inférieure (46, 47), des moyens (6, 7) étant prévus aux extrémités de la chambre supérieure (46) pour amener et évacuer l'eau de processus polluée dans respectivement hors de la chambre supérieure, en ce qu'un système de circulation est prévu pour l'amenée et l'évacuation répétées de l'eau de processus stockée dans le réservoir de stockage (19) dans respectivement hors de la chambre supérieure (46) de l'unité de filtration (5) et en ce que le dispositif (11, 26, 34) pour ramener l'eau de processus filtrée est relié à la chambre longitudinale inférieure (47).

6. Dispositif selon la revendication 5, caractérisé par un moyen (45) pour l'appui plan, sensiblement horizontal du moyen de filtre (3) dans l'unité de filtration (5).

7. Dispositif selon la revendication 5 ou 6, caractérisé en ce qu'une bande du moyen de filtre (3) est menée d'un cylindre de stockage (4) à travers l'unité de filtration (5) jusqu'à un cylindre d'enroulement (9).

8. Dispositif selon l'une quelconque des revendications 5 à 7, caractérisé en ce que celui-ci se présente sous la forme d'une unité mobile.
